# EUROPEAN PATENT APPLICATION

(11) **EP 4 674 609 A1**
(43) Date of publication of application: **07.01.2026**
(21) Application number: 24896186.4
(22) Date of filing: 04.11.2024
(51) Int. Cl.: B32B 1/08, B32B 27/34, B32B 27/32, B29C 48/18, C08L 77/06, C08L 53/00, C08L 51/06

(54) **THREE-LAYER COMPOSITE PIPE AND MANUFACTURING METHOD THEREFOR**

(30) Priority: 29.11.2023 CN 202311611791
(71) Applicant: Orinko High Performance Materials Technology Co., Ltd, Anqing, Anhui 246005 (CN); Orinko Advanced Plastics Co., Ltd, Hefei, Anhui 231202 (CN)
(72) Inventor: ZHENG, Wei, Anqing, Anhui 246005 (CN); SUN, Gangwei, Anqing, Anhui 246005 (CN)
(74) Representative: Petraz, Gilberto Luigi
(86) International application number: PCT/CN2024/129630
(87) International publication number: WO 2025/113095

(57) **Abstract**

The present invention discloses a three-layer composite pipe, including an inner layer, a middle layer, and an outer layer, where raw materials of the outer layer, in percentage by mass, includes: 50-95% of high-viscosity low-melting-point polyamide resin, 4.5-30% of a toughener, 0-20% of a plasticizer, 0.1-2% of a chain extender, and 0.1-1% of a heat-resistant agent; raw materials of the inner layer, in percentage by mass, includes: 40-90% of high-viscosity block copolymer polypropylene, 5-40% of high-viscosity homopolymer polypropylene, and 0-20% of a toughener; and the middle layer is an adhesive layer. The present invention further discloses a method for preparing the three-layer composite pipe. The three-layer composite pipe of the present invention can be used for straight pipes and corrugated pipes, having excellent mechanical properties, low-temperature toughness, and thermal aging resistance, good formability, and ease of shaping. It is suitable for cooling pipeline systems such as new energy vehicle batteries and energy storage batteries.

## Description

### TECHNICAL FIELD

The present invention relates to the technical field of polymer material processing, and in particular to a three-layer composite pipe and a preparation method thereof.

### BACKGROUND

With the rapid development of the new energy vehicle and energy storage industries, cooling of battery modules has become increasingly important. Rubber pipelines are gradually being replaced by polyamide pipelines, due to their heavy weight, requirement for vulcanization, and lack of environmental friendliness. In particular, PA12/adhesive layer/PP three-layer cooling pipelines have gradually become the mainstream trend in the development of cooling pipes at present, since they have advantages of low costs and good hydrolysis resistance.

CN114213750A discloses a multi-layer pipeline with a structure of polyamide PA/adhesive layer/PP, where the polyamide is selected from one or more of PA1012, PA12, PA612, PA610, PA614, PA12, PA1212, PA616, and PA618. However, materials such as PA610 have a relatively high melting point, which differs greatly from the melting point of the inner PP layer. When the pipe undergoes thermoforming, there is significant springback after cooling, making it difficult to control the shape of the thermoformed pipe and causing inconvenience for subsequent installation. Furthermore, the matrix resin of its inner layer material is homopolymer PP. To improve low-temperature toughness, a large quantity of a high-cost toughener needs to be added, which significantly increases the manufacturing costs of the pipeline and is not conducive to its popularization and application.

### SUMMARY

Based on the technical problems existing in the background, the present invention provides a three-layer composite pipe and a preparation method thereof.

The three-layer composite pipe provided by the present invention includes an inner layer, a middle layer, and an outer layer,
where raw materials of the outer layer, in percentage by mass, includes: 50-95% of high-viscosity low-melting-point polyamide resin, 4.5-30% of a toughener, 0-20% of a plasticizer, 0.1-2% of a chain extender, and 0.1-1% of a heat-resistant agent; a sum of percentages by mass of the raw materials of the outer layer is 100%; and the high-viscosity low-melting-point polyamide resin has a melting point of 170-214.5°C and a melt flow index of 0.1-10 g/10 min under test conditions of 235°C and 2.16 kg;
raw materials of the inner layer, in percentage by mass, includes: 40-90% of high-viscosity block copolymer polypropylene, 5-40% of high-viscosity homopolymer polypropylene, and 0-20% of a toughener; a sum of percentages by mass of the raw materials of the inner layer is 100%; and the high-viscosity block copolymer polypropylene has a melt flow index of 0.1-6 g/10 min under test conditions of 230°C and 2.16 kg, and the high-viscosity homopolymer polypropylene has a melt flow index of 0.1-6 g/10 min under the test conditions of 230°C and 2.16 kg; and
the middle layer is an adhesive layer.

Preferably, the high-viscosity low-melting-point polyamide resin is obtained by copolymerizing three or more monomers, followed by solid-phase viscosity increasing, the monomers are selected from dibasic acids, diamines, or lactams, and the monomers of the high-viscosity low-melting-point polyamide resin include one or more dibasic acids and one or more diamines;
in the monomers of the high-viscosity low-melting-point polyamide resin, a molar ratio of diamine monomers to dibasic acid monomers is 1:1; and lactam monomers account for 0-20% of a total molar quantity of the monomers of the high-viscosity low-melting-point polyamide resin;
the dibasic acid is selected from adipic acid, suberic acid, azelaic acid, sebacic acid, undecanedioic acid, dodecanedioic acid, tridecanedioic acid, tetradecanedioic acid, pentadecanedioic acid, or hexadecanedioic acid;
the diamine is selected from hexamethylenediamine, octamethylenediamine, nonamethylenediamine, decamethylenediamine, undecamethylenediamine, dodecamethylenediamine, tridecamethylenediamine, tetradecamethylenediamine, pentadecamethylenediamine, or hexadecamethylenediamine; and
the lactam is selected from caprolactam, undecalactam, or laurolactam.

Preferably, the high-viscosity low-melting-point polyamide resin is formed by copolymerization of one diamine and two dibasic acids; or the high-viscosity low-melting-point polyamide resin is formed by copolymerization of two diamines and one dibasic acid; or the high-viscosity low-melting-point polyamide resin is formed by copolymerization of one diamine, one dibasic acid, and one lactam.

Preferably, a method for preparing the high-viscosity low-melting-point polyamide resin is as follows: subjecting monomers to a salt forming reaction in deionized water; adding an obtained salt solution into a polymerization kettle; first conducting a reaction with a temperature maintained at 240-260°C under nitrogen protection for 2-5 h; then vacuumizing and conducting the reaction for 1-3 h; adjusting viscosity in a reaction process; after the reaction is completed, performing underwater pelletizing and drying to obtain a low-melting-point copolymer polyamide; adding the low-melting-point copolymer polyamide into a vacuum rotary kettle; and increasing viscosity at 140-160°C under vacuum conditions for 2-24 h to obtain the high-viscosity low-melting-point polyamide resin.

Preferably, in the raw materials of the outer layer, the toughener is at least one of maleic anhydride-grafted POE, maleic anhydride-grafted SEBS, and maleic anhydride-grafted EPDM; the plasticizer is N-butylbenzenesulfonamide; the chain extender is BRUGGOLEN M1251; and the heat-resistant agent is a Bruggemann copper salt BRUGGOLEN H3336, a Bruggemann copper salt BRUGGOLEN H3346, or a combination thereof.

Preferably, the high-viscosity block copolymer polypropylene is high-viscosity propylene-ethylene block copolymer PP, high-viscosity propylene-butylene block copolymer PP, or a combination thereof, where an ethylene content of the high-viscosity propylene-ethylene block copolymer PP is 1-8%, and a butylene content of the high-viscosity propylene-butylene block copolymer PP is 1-8%.

Preferably, in the raw materials of the inner layer, the toughener is POE, SEBS, or a combination thereof.

Preferably, the raw materials of the outer layer further include a PA antioxidant, and a mass of the PA antioxidant accounts for 0.1-2% of a total mass of the raw materials of the outer layer; the PA antioxidant is at least one of BASF Irganox 1098, BASF Irganox 245, and BASF Irganox 168; the raw materials of the inner layer further include a PP antioxidant, and a mass of the PP antioxidant accounts for 0.1-2% of a total mass of the raw materials of the inner layer; and the PP antioxidant is BASF Irganox 1010, BASF Irganox 168, or a combination thereof.

Preferably, the raw materials of the outer layer further include a PA color masterbatch, and a mass of the PA color masterbatch accounts for 0-2% of a total mass of the raw materials of the outer layer; and the raw materials of the inner layer further include a PP color masterbatch, and a mass of the PP color masterbatch accounts for 0-2% of a total mass of the raw materials of the inner layer.

Preferably, the raw material of the middle layer is maleic anhydride-grafted PP. Preferably, a maleic anhydride grafting rate of the maleic anhydride-grafted PP is 0.1-3%.

Preferably, the maleic anhydride-grafted PP is Mitsui ADMER QB520, Mitsui ADMER QB510, or a combination thereof.

Preferably, the three-layer composite pipe has an outer diameter of 4-50 mm and a total wall thickness of 0.6-4 mm, where a thickness of the outer layer is ≤ 80% of the total wall thickness of the composite pipe, a thickness of the inner layer is ≤ 60% of the total wall thickness of the composite pipe, and a thickness of the middle layer is ≤ 30% of the total wall thickness of the composite pipe.

Preferably, the three-layer composite pipe has an outer diameter of 8-36 mm and a total wall thickness of 1-2 mm.

Preferably, the thickness of the outer layer of the three-layer composite pipe accounts for 50-70% of the total wall thickness of the composite pipe.

Preferably, the thickness of the inner layer of the three-layer composite pipe accounts for 20-50% of the total wall thickness of the composite pipe.

Preferably, the thickness of the middle layer of the three-layer composite pipe accounts for 10-20% of the total wall thickness of the composite pipe.

In the present invention, the three-layer composite pipe can be a circular straight pipe or a corrugated pipe.

A method for preparing the three-layer composite pipe includes steps of:
S1. mixing the raw materials of the outer layer uniformly, and then performing melt extrusion pelletizing to obtain outer layer material pellets; and mixing the raw materials of the inner layer uniformly, and then performing melt extrusion pelletizing to obtain inner layer material pellets; and
S2. adding the outer layer material pellets, the raw materials of the middle layer, and the inner layer material pellets into a three-layer pipe extruder separately for melt extrusion to obtain the three-layer composite pipe.

Preferably, in S1, components of the raw materials of the outer layer except for the plasticizer are uniformly mixed and then added into a main feeding port of a twin-screw extruder, and the plasticizer is added into a side feeding port for melt extrusion pelletizing to obtain outer layer material particles, where temperatures for a barrel of the twin-screw extruder are as follows: zone 1 at a temperature of 150-250°C, zone 2 at a temperature of 190-270°C, zone 3 at a temperature of 190-270°C, zone 4 at a temperature of 190-270°C, zone 5 at a temperature of 190-270°C, zone 6 at a temperature of 190-270°C, zone 7 at a temperature of 190-270°C, zone 8 at a temperature of 190-270°C, zone 9 at a temperature of 190-270°C, and zone 10 at a temperature of 190-270°C; a die head has a temperature of 200-280°C; and the twin-screw extruder has a main motor rotational speed of 300-900 r/min.

Preferably, in S1, after the raw materials of the inner layer are uniformly mixed and then added into a twin-screwcrew extruder for melt extrusion pelletizing to obtain inner layer material particles, where temperatures for a barrel of the twin-screw extruder are as follows: zone 1 at a temperature of 150-220°C, zone 2 at a temperature of 200-260°C, zone 3 at a temperature of 200-260°C, zone 4 at a temperature of 200-260°C, zone 5 at a temperature of 200-260°C, zone 6 at a temperature of 200-260°C, zone 7 at a temperature of 200-260°C, zone 8 at a temperature of 200-260°C, zone 9 at a temperature of 200-260°C, and zone 10 at a temperature of 200-260°C; a die head has a temperature of 210-270°C; and the twin-screw extruder has a main motor rotational speed of 150-800 r/min.

Preferably, temperatures of an outer layer heating section of the three-layer pipe extruder are as follows: zone 1 at 180-200°C, zone 2 at 190-260°C, zone 3 at 190-260°C, zone 4 at 190-260°C, and zone 5 at 190-260°C; temperatures of an inner layer heating section are as follows: zone 1 at 140-160°C, zone 2 at 190-250°C, zone 3 at 190-250°C, zone 4 at 190-250°C, and zone 5 at 190-250°C; temperatures of a middle layer heating section are as follows: zone 1 at 160-180°C, zone 2 at 190-250°C, zone 3 at 190-250°C, zone 4 at 190-250°C, and zone 5 at 190-250°C; and temperatures of a die are: zone 1 at 200-270°C, zone 2 at 200-270°C, zone 3 at 200-270°C, zone 4 at 200-270°C, and zone 5 at 210-270°C.

The beneficial effects of the present invention are as follows:
1. The copolyamide resin of the outer layer uses 3 or more dibasic acids, diamines, and lactams as monomer raw materials. Through a component adjustment method, the melting point of the copolyamide resin is controlled at 170-214.5°C after polymerization. Compared with the commonly available PA12/adhesive layer/PP cooling pipes on the market, the raw materials of the present invention have wider sources. All the raw materials can be obtained through procurement, and the polymerization process is mature. The melting point of the copolyamide can be adjusted to be closer to that of PP. Since the thermoforming temperature of the pipe is lower than the melting point of PP, 165°C, to prevent the inner PP layer from melting, when the melting point of the modified copolyamide material of the outer layer is adjusted to be close to that of PP, the three-layer pipe exhibits little springback, a stable shape, ease of shape control, and convenient installation after thermoforming and cooling. By adding the heat-resistant additive, the long-term heat resistance of the material is improved; and by adding the chain extender, the molecular chain length is increased, and the long-term weather resistance of the material is improved.
2. For the inner-layer PP material, it is proposed for the first time to use the blending modification of copolymer PP and homopolymer PP. Copolymer PP provides good low-temperature toughness, but due to its low crystallinity, an aqueous ethylene glycol solution can penetrate between its molecules, seriously affecting its mechanical strength. The presence of homopolymer PP, due to its high crystallinity, can prevent the aqueous ethylene glycol solution from penetrating into the interior of the PP material and ensure good hydrolysis resistance. The inner layer made through blending modification of copolymer PP and homopolymer PP can have both excellent low-temperature toughness and hydrolysis resistance without or with less use of the toughener.

Compared with the existing PA/adhesive layer/PP three-layer pipes, the present invention employs the high-viscosity low-melting-point polyamide resin obtained by copolymerizing a variety of different polyamide resin monomers as the outer-layer material, and the blend-modified copolymer PP and homopolymer PP as the inner-layer material. This offers abundant raw material sources, and provides more diverse options for pipes used in the cooling systems of new energy vehicles and energy storage battery modules. At the same time, the pipe has more advantages in performance and cost.

### DETAILED DESCRIPTION

The technical solutions of the present invention are described below in detail through specific examples.

In the following examples and comparative examples:
High-viscosity polyamide resin G1 (with a melting point of 190°C): it was obtained by copolymerizing PA612 salt and PA614 salt at a weight ratio of 1:3, followed by solid-phase viscosity increasing. The preparation method was as follows: hexamethylenediamine and dodecanedioic acid were added into deionized water for reaction to obtain a polyamide 612 salt solution with a solid content of 50%. Hexamethylenediamine and tetradecanedioic acid were added into deionized water for reaction to obtain a polyamide 614 salt solution with a solid content of 50%. The above prepared PA612 salt solution and PA614 salt solution were added into a polymerization kettle. The mixture was first reacted with a temperature maintained at 250°C under nitrogen protection for 3 h, then vacuumized and reacted under the controlled condition of < 500 Pa for 1 h, with viscosity adjusted in the reaction process. After the reaction was completed, underwater pelletizing and drying were performed to obtain low-melting-point copolyamide. The low-melting-point copolyamide was added into a vacuum rotary kettle and subjected to solid-phase viscosity increasing at 160°C under vacuum conditions (< 500 Pa) for 15 h to obtain high-viscosity polyamide resin G1 with a melt flow index of 3.2 g/10 min (GB/T 3682, 235°C, 2.16 kg).

Medium-viscosity polyamide resin g1 (with a melting point of 190°C): it was obtained by copolymerizing PA612 salt and PA614 salt at a weight ratio of 1:3. The preparation method was as follows: hexamethylenediamine and dodecanedioic acid were added into deionized water for reaction to obtain a polyamide 612 salt solution with a solid content of 50%. Hexamethylenediamine and tetradecanedioic acid were added into deionized water for reaction to obtain a polyamide 614 salt solution with a solid content of 50%. The above prepared PA612 salt solution and PA614 salt solution were added into a polymerization kettle. The mixture was first reacted with a temperature maintained at 250°C under nitrogen protection for 3 h, then vacuumized and reacted under the controlled condition of < 500 Pa for 2 h, with viscosity adjusted in the reaction process to obtain medium-viscosity polyamide resin g1 with a melt flow index of 22.8 g/10 min (GB/T 3682, 235°C, 2.16 kg).

High-viscosity polyamide resin G2 (with a melting point of 203°C): it was obtained by copolymerizing PA612 salt and PA610 salt at a weight ratio of 3:1, followed by solid-phase viscosity increasing. The preparation method was the same as that for high-viscosity polyamide resin G1. The high-viscosity polyamide resin G2 had a melt flow index of 2.2 g/10 min (GB/T 3682, 235°C, 2.16 kg).

High-viscosity polyamide resin G3 (with a melting point of 214.5°C): it was obtained by copolymerizing PA610 salt and PA66 salt at a weight ratio of 9:1, followed by solid-phase viscosity increasing. The preparation method was the same as that for high-viscosity polyamide resin G1. The high-viscosity polyamide resin G3 had a melt flow index of 1.6 g/10 min (GB/T 3682, 235°C, 2.16 kg).

High-viscosity polyamide resin G4 (with a melting point of 170°C): it was obtained by copolymerizing PA610 salt and a caprolactam salt at a weight ratio of 3:2, followed by solid-phase viscosity increasing. The preparation method was the same as that for high-viscosity polyamide resin G1. The high-viscosity polyamide resin G4 had a melt flow index of 0.8 g/10 min (GB/T 3682, 235°C, 2.16 kg).

The raw material components and test results for mechanical properties of the outer layer of the composite pipe are as shown in Table 1:

**Table 1**

| Raw material | | Exam ple A1 | Exam ple A2 | Exam ple A3 | Exam ple A4 | Comparat ive Example a1 | Comparat ive Example a2 | Comparat ive Example a3 | Comparat ive Example a4 | Comparat ive Example a5 |
|---|---|---|---|---|---|---|---|---|---|---|
| Proportion | Copolymer resin G1 (high viscosity): melting point 190°C, and melt flow index 3.2 g/10 min (GB/T 3682) | 72.6 | | | | 72.6 | 72.6 | 72.6 | | |
| | Copolymer resin g1 (medium viscosity): melting point 190°C, and melt flow index 22.8 g/10 min (GB/T 3682) | | | | | | | | 72.6 | |
| | PA610 (high viscosity): melting point 222°C, and melt flow index 3 g/10 min (GB/T 3682) | | | | | | | | | 72.6 |
| | Copolymer resin G2 (high viscosity): melting point 203°C, and melt flow index 2.2 g/10 min (GB/T 3682) | | 50 | | | | | | | |
| | Copolymer resin G3 (high viscosity): melting point 214.5°C, and melt flow index 1.6 g/10 min (GB/T 3682) | | | 69.9 | | | | | | |
| | Copolymer resin G4 (high viscosity): melting point 170°C, and melt flow index 0.8 g/10 min (GB/T 3682) | | | | 95 | | | | | |
| | BBSA | 10 | 14.9 | 20 | | 10 | 10 | 10 | 10 | 10 |
| | POE-MA (DuPont FUSABOND N216) | 15 | | | | | 15 | 15 | 15 | 15 |
| | SEBS-MA (Kraton Polymers FG1901) | | | 7.8 | | | | | | |
| | EPDM-MA (ExxonMobil EXXELOR VA1803) | | 30 | | 4.5 | | | | | |
| | Antioxidant Irganox 245 | | | 0.1 | 0.1 | | | | | |
| | Chain extender BRUGGOLEN M1251 | 0.5 | 0.1 | 2 | 0.2 | 0.5 | | 0.5 | 0.5 | 0.5 |
| | Antioxidant Irganox 1098 | 0.2 | 1.5 | | | 0.2 | 0.2 | 0.2 | 0.2 | 0.2 |
| | Antioxidant Irganox 168 | 0.2 | *0.5* | | 0.1 | 0.2 | 0.2 | 0.2 | 0.2 | 0.2 |
| | Bruggemann copper salt BRUGGOLEN H3336 | *0.5* | 1 | 0.2 | 0.1 | *0.5* | *0.5* | | *0.5* | *0.5* |
| | PA black masterbatch | 1 | 2 | | | 1 | 1 | 1 | 1 | 1 |
| | Total mass % | 100.0 | 100.0 | 100.0 | 100.0 | 85.0 | 99.5 | 99.5 | 100.0 | 100.0 |
| Performance test | Tensile strength MPa (ISO 527) | 43.6 | 38.7 | 42.7 | 48.7 | 45.5 | 42.5 | 40.2 | 42.9 | 41.1 |
| | Elongation at break % (ISO 527) | 238.7 | 269.5 | 247.9 | 207.8 | 198.5 | 221.1 | 228.3 | 189.2 | 212.3 |
| | Low-temperature notched impact at -30°C KJ/m² (ISO 179) | 12.5 | 25.7 | 8.9 | 5.6 | 2.6 | 11.2 | 10.6 | 8.1 | 8.5 |
| | Melt flow index g/10min, at 235°C and under 2.16 kilograms (GB/T 3682) | 0.9 | 0.5 | 0.6 | 1.8 | 2.7 | 3.7 | 1.2 | 12.8 | 0.8 |
| | Elongation at break %, after thermal aging at 150°C for 1000 hours (ISO 527) | 121.3 | 117.2 | 107.8 | 131.2 | 102.1 | 69.2 | 56.2 | 76.1 | *105.1* |
| | Modified melting point °C | 190 | 190 | 214.5 | 170 | 190 | 190 | 190 | 190 | 222 |

It can be seen from Table 1:
When Comparative Example a1 was compared with Example A1, no POE-MA was added to Comparative Example a1. The low-temperature impact performance decreased from 12.5 KJ/m² to 2.6 KJ/m², showing poor low-temperature toughness.

When Comparative Example a2 was compared with Example A1, no chain extender was added to Comparative Example a2. After thermal aging at 150°C for 1000 hours, the elongation at break decreased from 121.3% of Example A1 to 69.2%, showing poor thermal aging resistance.

When Comparative Example a3 was compared with Example A1, no heat-resistant copper salt was added to Comparative Example a3. After thermal aging at 150°C for 1000 hours, the elongation at break decreased from 121.3% of Example A1 to 56.2%, showing poor thermal aging resistance.

When Comparative Example a4 was compared with Example A1, medium-viscosity copolymer polyamide resin was used in Comparative Example a4. The original melt flow index increased from 0.9 of Example A1 to 12.8 g/10 min, which would lead to unstable pipe extrusion. Additionally, after thermal aging at 150°C for 1000 hours, the elongation at break decreased from 121.3% of Example A1 to 76.1%, showing poor thermal aging resistance.

When Comparative Example a5 was compared with Example A1, polyamide resin PA610 with a high melting point was used in Comparative Example a5. The modified material had a melting point of 222°C, which was significantly higher than 190°C. After the subsequent thermoforming of the three-layer pipe, the pipe showed severe springback, making it difficult to control the pipe shape.

In the following Examples and Comparative Examples, the extrusion-grade block copolymer PP and homopolymer PP were purchased from the market, where copolymer PP1 was Shanghai SECCO T3401, copolymer PP2 was Shanghai SECCO K7002, and homopolymer PP3 was Sinopec Maoming T30S. All Examples and Comparative Examples were prepared through blending modification according to the aforementioned method. The raw materials were formulated in percentage by weight, with a total of 100%. After pelletizing, the pellets were dried and then injection-molded into samples. The conditions of the hydrolysis test were as follows: the tensile samples were placed in an aqueous ethylene glycol solution with a concentration of 50% at 130°C for 1000 hours, and then their mechanical properties were tested.

The raw material components and test results for mechanical properties of the inner layer of the composite pipe are as shown in Table 2:

**Table 2**

| Raw material | | Example B1 | Example B2 | Example B3 | Example B4 | Comparative Example b1 | Comparative Example b2 | Comparative Example b3 |
|---|---|---|---|---|---|---|---|---|
| | Copolymer PP1: melt flow index 0.3 g/10 min (GB/T 3682) | 90 | | 78 | | 99 | | 90 |
| | Copolymer PP2: melt flow index 1.4 g/10 min (GB/T 3682) | | 60 | | 40 | | | |
| Proportion | Homopolymer PP3: melt flow index 3 g/10 min (GB/T 3682) | 9 | 23.5 | 5 | 39.9 | | 99 | 9 |
| | POE (DOW ENGAGE 8180) | | 15 | | 20 | | | |
| | SEBS (Baling Petrochemical 503T) | | | 15 | | | | |
| | BASF antioxidant Irganox 1010 | 0.5 | 1 | 1 | 0.1 | 0.5 | 0.5 | |
| | BASF antioxidant Irganox 168 | 0.5 | 0.5 | 1 | | 0.5 | 0.5 | |
| | Total mass % | 100 | 100 | 100 | 100 | 100 | 100 | 99 |
| Performance test | Tensile strength MPa (ISO 527) | 23.2 | 24.1 | 20.3 | 21.5 | 20.1 | 26.4 | 23.5 |
| | Elongation at break % (ISO 527) | 315.1 | 321.4 | 351.2 | 356.3 | 349.8 | 308.3 | 311.2 |
| | Low-temperature notched impact at - 30°C KJ/m² (ISO 179) | 6.1 | 7.8 | 9.5 | 7.5 | 6.5 | 1.9 | *5.3* |
| | Melt flow index g/10min, at 230°C and under 2.16 kilograms (GB/T 3682) | 0.6 | 2.6 | 0.8 | 2.9 | 0.9 | 3.8 | 0.9 |
| | Elongation at break %, after thermal aging at 150°C for 1000 hours | 252.1 | 247.7 | 256.1 | 237.1 | 121.2 | 272.1 | 70.1 |

Compared with Example B1, Comparative Example b1 used only copolymer PP without adding homopolymer PP. The tensile strength decreased from 23.2 MPa of Example B1 to 20.1 MPa. Meanwhile, after thermal aging, the elongation at break dropped from 252.1% of Example B1 to 121.2%. Compared with Example B1, Comparative Example b2 used only homopolymer PP without adding copolymer PP. The low-temperature notched impact strength decreased from 6.1 KJ/m² of Example B1 to 2.1 KJ/m². After thermal aging at 150°C for 1000 hours, the elongation at break fell from 252.1 % of Example B1 to 72.1%, indicating poor thermal aging resistance of the material. For Comparative Example b3, no antioxidant was added. After thermal aging at 150°C for 1000 hours, the elongation at break decreased from 252.1% of Example B1 to 20.1%, showing poor thermal aging resistance of the material.

A circular straight pipe with an outer diameter of 16 mm and a wall thickness of 1.5 mm was prepared by the aforementioned extrusion method for three-layer composite pipes. The normal-temperature burst pressure of the pipe was tested. A 10 mm section of the pipe was taken, longitudinally split, and then peeled to test the adhesion between the 3 layers. The low-temperature impact resistance of the pipe was tested at -40°C with a 7.5 J pendulum in accordance with the method specified in QC/T80-20 11. A 50 cm section of the pipe was taken, filled with a cooling liquid of a 50% aqueous ethylene glycol solution inside, sealed at both ends, and placed in an oven at 130°C for a 1000-hour thermal aging test. After 1000 hours, the burst pressure and elongation at break of the pipe were tested. The performance tests of the pipes are as shown in Table 3:

**Table 3**

| | Pipe with an outer diameter of 16 mm and a wall thickness of 1.5 mm | Exampl e 1 | Exampl e 2 | Exampl e 3 | Exampl e 4 | Compar ative Exampl e 1 | Compar ative Exampl e 2 | Compar ative Exampl e 3 | Compar ative Exampl e 4 | Compar ative Exampl e 5 |
|---|---|---|---|---|---|---|---|---|---|---|
| | Outer layer material | A1 | A2 | A3 | A4 | a1 | a2 | a3 | a4 | a5 |
| Pipe structure | Outer layer wall thickness mm | 1 | *1.05* | 0.9 | 0.7 | 1 | 1 | 1 | 1 | 1 |
| | Adhesive layer PP-MA (QB510), wall thickness mm | 0.1 | 0.15 | 0.2 | 0.1 | 0.1 | 0.1 | 0.1 | 0.1 | 0.1 |
| | Inner layer material | B1 | B2 | B3 | B4 | b1 | b2 | b3 | b1 | B1 |
| | Inner layer wall thickness mm | 0.4 | 0.3 | 0.4 | 0.7 | 0.4 | 0.4 | 0.4 | 0.4 | 0.4 |
| | Pipe burst pressure at 23°C MPa | 4.9 | 5.2 | 4.8 | 4 | 3.6 | 4.6 | 4.8 | | 4.8 |
| | Adhesion between pipe inner and outer layers | Good | Good | Good | Good | Good | Good | Good | | Good |
| | Pipe low-temperature impact at - 40°C | No break | No break | No break | No break | Outer layer broken | Inner layer broken | No break | | No break |
| Pipe performance test | Burst pressure MPa, after internal filling with cooling fluid and thermal aging at 130°C for 1000 hours | 4.1 | 4.3 | 4.4 | 3.2 | - | - | 2.1 | Unstabl e pipe extrusio n | 3.9 |
| | Elongation at break % (ISO 527), after internal filling with cooling fluid and thermal aging at 130°C for 1000 hours | 132.1 | 122.1 | 105.1 | 123.2 | - | - | 35.1 | | 125.6 |
| | Pipe springback after thermoforming at 160°C | No springb ack | No springb ack | No springb ack | No springb ack | No springb ack | No springb ack | No springb ack | - | Severe springb ack |

It can be seen from Table 3:
Compared with Example 1, the outer layer of the pipe in Comparative Example 1 cracked under the low-temperature impact test at -40°C, indicating poor low-temperature resistance.
Compared with Example 1, the inner layer of the pipe in Comparative Example 2 cracked under the low-temperature impact test at -40°C, indicating poor low-temperature resistance.
Compared with Example 1, after 1000 hours of thermal aging, the burst pressure of the pipe in Comparative Example 3 decreased from 4.1 MPa of Example 1 to 2.1 MPa; and the elongation at break of the pipe decreased from 132.1% to 35.1%, indicating poor thermal aging resistance.
Compared with Example 1, during the co-extrusion of the pipe in Comparative Example 4, the pipe extrusion was unstable, and the pipe could not be formed due to the high melt flow index of the outer layer.
Compared with Example 1, after thermoforming at 160°C, the pipe in Comparative Example 5 showed severe springback, which failed to meet the installation requirements.

In conclusion, Examples 1, 2, 3, and 4 exhibit good overall performance and can meet the application requirements for cooling pipelines in new energy vehicles, energy storage, and other fields.

All equivalent substitutions or modifications made by any person skilled in the art within the technical scope disclosed by the present invention in accordance with the technical solutions and inventive concept of the present invention shall be encompassed within the scope of protection of the present invention.

## Claims

1. A three-layer composite pipe, comprising an inner layer, a middle layer, and an outer layer,
wherein raw materials of the outer layer, in percentage by mass, comprises: 50-95% of high-viscosity low-melting-point polyamide resin, 4.5-30% of a toughener, 0-20% of a plasticizer, 0.1-2% of a chain extender, and 0.1-1% of a heat-resistant agent; and the high-viscosity low-melting-point polyamide resin has a melting point of 170-214.5°C and a melt flow index of 0.1-10 g/10 min under test conditions of 235°C and 2.16 kg;
raw materials of the inner layer, in percentage by mass, comprises: 40-90% of high-viscosity block copolymer polypropylene, 5-40% of high-viscosity homopolymer polypropylene, and 0-20% of a toughener; and the high-viscosity block copolymer polypropylene has a melt flow index of 0.1-6 g/10 min under test conditions of 230°C and 2.16 kg, and the high-viscosity homopolymer polypropylene has a melt flow index of 0.1-6 g/10 min under the test conditions of 230°C and 2.16 kg; and
the middle layer is an adhesive layer.

2. The three-layer composite pipe according to claim 1, wherein the high-viscosity low-melting-point polyamide resin is obtained by copolymerizing three or more monomers, followed by solid-phase viscosity increasing, the monomers are selected from dibasic acids, diamines, or lactams, and the monomers of the high-viscosity low-melting-point polyamide resin comprise one or more dibasic acids and one or more diamines;
in the monomers of the high-viscosity low-melting-point polyamide resin, a molar ratio of diamine monomers to dibasic acid monomers is 1:1; and lactam monomers account for 0-20% of a total molar quantity of the monomers of the high-viscosity low-melting-point polyamide resin;
the dibasic acid is selected from adipic acid, suberic acid, azelaic acid, sebacic acid, undecanedioic acid, dodecanedioic acid, tridecanedioic acid, tetradecanedioic acid, pentadecanedioic acid, or hexadecanedioic acid;
the diamine is selected from hexamethylenediamine, octamethylenediamine, nonamethylenediamine, decamethylenediamine, undecamethylenediamine, dodecamethylenediamine, tridecamethylenediamine, tetradecamethylenediamine, pentadecamethylenediamine, or hexadecamethylenediamine; and
the lactam is selected from caprolactam, undecalactam, or laurolactam.

3. The three-layer composite pipe according to claim 1, wherein in the raw materials of the outer layer, the toughener is at least one of maleic anhydride-grafted POE, maleic anhydride-grafted SEBS, and maleic anhydride-grafted EPDM; the plasticizer is N-butylbenzenesulfonamide; the chain extender is BRUGGOLEN M1251; and the heat-resistant agent is a Bruggemann copper salt BRUGGOLEN H3336, a Bruggemann copper salt BRUGGOLEN H3346, or a combination thereof.

4. The three-layer composite pipe according to claim 1, wherein in the raw materials of the inner layer, the toughener is POE, SEBS, or a combination thereof.

5. The three-layer composite pipe according to claim 1, wherein the raw materials of the outer layer further comprise a PA antioxidant, and a mass of the PA antioxidant accounts for 0.1-2% of a total mass of the raw materials of the outer layer; the PA antioxidant is at least one of BASF Irganox 1098, BASF Irganox 245, and BASF Irganox 168; the raw materials of the inner layer further comprise a PP antioxidant, and a mass of the PP antioxidant accounts for 0.1-2% of a total mass of the raw materials of the inner layer; and the PP antioxidant is BASF Irganox 1010, BASF Irganox 168, or a combination thereof.

6. The three-layer composite pipe according to claim 1, wherein the raw materials of the outer layer further comprise a PA color masterbatch, and a mass of the PA color masterbatch accounts for 0-2% of a total mass of the raw materials of the outer layer; and the raw materials of the inner layer further comprise a PP color masterbatch, and a mass of the PP color masterbatch accounts for 0-2% of a total mass of the raw materials of the inner layer.

7. The three-layer composite pipe according to claim 1, wherein the raw material of the middle layer is maleic anhydride-grafted PP.

8. The three-layer composite pipe according to claim 1, wherein the three-layer composite pipe has an outer diameter of 4-50 mm and a total wall thickness of 0.6-4 mm, wherein a thickness of the outer layer is ≤ 80% of the total wall thickness of the composite pipe, a thickness of the inner layer is ≤ 60% of the total wall thickness of the composite pipe, and a thickness of the middle layer is ≤ 30% of the total wall thickness of the composite pipe.

9. A method for preparing the three-layer composite pipe according to any one of claims 1-8, comprising steps of:
S1. mixing the raw materials of the outer layer uniformly, and then performing melt extrusion pelletizing to obtain outer layer material pellets; and mixing the raw materials of the inner layer uniformly, and then performing melt extrusion pelletizing to obtain inner layer material pellets; and
S2. adding the outer layer material pellets, the raw materials of the middle layer, and the inner layer material pellets into a three-layer pipe extruder separately for melt extrusion to obtain the three-layer composite pipe.
